Europäisches Patentamt

European Patent Office

Office européen des brevets

(11) Publication number: **0 182 892**
**B1**

# (12) EUROPEAN PATENT SPECIFICATION

(45) Date of publication of patent specification: 01.06.88

(51) Int. Cl.⁴: **B 07 B 13/10**

(21) Application number: 85903080.1

(22) Date of filing: 03.06.85

(86) International application number:
PCT/SE85/00233

(87) International publication number:
WO 86/00031 03.01.86 Gazette 86/01

(54) A METHOD AND APPARATUS FOR SEPARATING METAL PARTICLES.

(30) Priority: 07.06.84 SE 8403080

(43) Date of publication of application:
04.06.86 Bulletin 86/23

(45) Publication of the grant of the patent:
01.06.88 Bulletin 88/22

(84) Designated Contracting States:
AT BE CH DE FR GB IT LI LU NL

(56) References cited:
US-A-4 185 746

Derwent's absract No. J3303 D/36, SU 776660
H. Schubert, "Aufbereiting fester mineralischer
Rohstoffe", Leipzig 1967

(73) Proprietor: HAGE, Urban
Sopranvägen 3
S-183 38 Täby (SE)

(72) Inventor: HAGE, Urban
Sopranvägen 3
S-183 38 Täby (SE)

(74) Representative: Örtenblad, Bertil Tore
Noréns Patentbyra AB Banérgatan 73
S-11526 Stockholm (SE)

# Description

The present invention relates to a method and arrangement for separating metal particles, and primarily for separating non-magnetic particles.

The invention relates in particular to the separation of lead and copper from a mixture of lead and copper particles.

Unserviceable electric cables, which normally contain lead, copper, aluminium and plastics material, are often crushed into fragments, and the resultant mixture of fragmented materials fed to a vibratory table, to separate from said mixture firstly the plastics material and then the aluminium. The heavier elements in the mixture move down to the bottom thereof under the action of the vibrations produced by the table, while the lighter elements move up to the uppermost layer of the mixture. Both plastics and aluminium have a much lower density than lead and copper, and hence this method can be applied successfully to extract plastics and aluminium from such mixtures.

On the other hand, no method is known by which lead can be separated effectively from copper. This is contingent on the difficulties created by the fact that both lead and copper are non-magnetic materials, and that the difference in their densities is too small to enable the same to be separated from one another on a vibratory table for example.

The present provides a method and apparatus for effectively separating lead and copper one from the other.

Thus, the present invention relates to a method of separating metal particles comprising two different metals, where the one metal exhibits higher frictional forces against a surface than particles of another metal, this method being intended in particular for separating lead and copper particles one from the other, and is characterized in that a layer of mixed metal particles is fed by means of a feed conveyor or corresponding device onto the peripheral surface of a drum which rotates about a horizontal axis; in that the layer is fed to said drum periphery at a location which is spaced from a vertical plane through the drum axis in a direction opposite to that in which the drum rotates; in that the distance between said location and said drum axis is adapted so that those particles which exhibit the higher degree of friction against the drum periphery than other particles are carried by the drum in direction of rotation thereof, while said other particles are transported in an opposite direction under the force of gravity.

As will be understood, although the invention is particularly intended for mutual separation of lead and copper, it is not restricted solely to these metals.

The invention also relates to apparatus for separating mutually different metal particles, where the particles of one metal exhibit a greater degree of friction against a surface than another of said metals, particularly for separating lead and copper particles one from the other, said apparatus being characterized by a drum which is rotatable about a horizontal axis; and a feed conveyor or corresponding device which is adapted to feed a mixture of said metal particles onto the drum periphery at a location thereof spaced from a vertical plane through the drum axis through a given distance in the opposite direction to that in which the drum rotates, said distance being of such magnitude that those particles which exhibit greater friction against the peripheral surface of the drum as it rotates are carried by the drum in its direction of rotation, while said other particles are transported in an opposite direction gravitationally.

In the aforesaid crushing process, in which copper and lead are fragmented into smaller particles of respective metals, these particles have the form of small, flattened and slightly elongated metal slugs. The lead slugs are, more often than not, in the form of elongated flattened particles having a length of 2-5 mm for example, while the copper slugs have a length of 1-2 mm for example. The copper slugs also have a somewhat larger form than the lead slugs. This difference in the shape of the slugs is due, inter alia, to the fact that lead is tougher than copper and does not strain-harden to the same extent as copper during the crushing process.

The invention will now be described in more detail with reference to a number of embodiments thereof illustrated in the accompanying drawing, in which

Figure 1 illustrates two separation stages in accordance with the invention;

Figure 2 illustrates in smaller scale an arrangement according to the invention comprising five separation stages;

Figure 3 illustrates an embodiment of a drum; and

Figure 4 illustrates part of a conveyor belt with metal slugs located thereon, these slugs being shown in approximately their normal size.

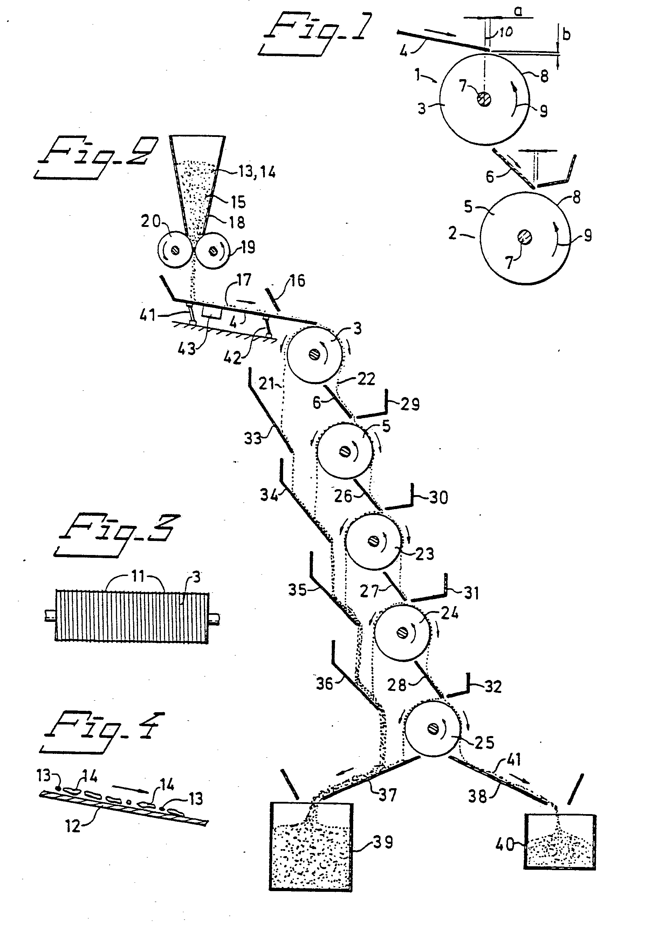

Figure 1 illustrates an arrangement according to the invention incorporating separation stages 1, 2, of which a first stage comprises an upper drum 3 or cylinder and an associated feed conveyor 4, and the other stage comprises a lower drum 5 and associated feed conveyor 6. Thus, each separation stage incorporates a drum 3;5 or a cylinder driven by suitable drive means for rotation about a horizontal axis 7. Arranged above the drums is a respective feed conveyor 4;6 by means of which a mixture of metal particles is deposited onto the peripheral surface 8 of respective drums at a location thereon spaced at a distance _a_ from a vertical plane 10 extending through the drum axis in a direction opposite to that in which the drum rotates. This distance _a_ is of a magnitude such that those particles which exhibit a high degree of friction against the drum periphery as the drum rotates are carried with the drum in the direction of its rotation, while the other particles presenting lower friction against the drum periphery are transported in a counter direction gravitationally. The magnitude of the distance $a$ is primarily dependent on the rotational speed of the drum and its diameter, in combination with the type of metal from which the particles are made.

As beforementioned, the present invention is primarily intended to separate mutually copper particles and lead particles, these particles being obtained by disintegrating electric cables to the aforesaid sizes.

In accordance with one preferred embodiment, the drum 3;5 is arranged to rotate at a speed of 1 r.p.m. to 100 r.p.m., preferably 35 r.p.m. to 60 r.p.m. The diameter of the drum is preferably 50 mm to 200 mm, preferably 70 mm to 120 mm.

During the mutual separation of the aforesaid copper particles and lead particles, the drum 3;5 is suitably rotated at a speed of about 45 r.p.m. and has a diameter of about 70 mm. The distance $a$ in this instance is only some few millimeters, suitably 1-2 mm.

By "drum" is meant both in the description and the claims a drum, a roller, a cylinder or a tube. The drum 3;5 is made of metal.

The metal drum preferably has a roughened surface, to increase the friction against the metal particles, and particularly those metal particles which exhibit the higher friction against the drum periphery 8. The peripheral surface 8 of the drum is preferably roughened by means of a milled groove 11 extending helically around the drum 3, said groove being shallow in relation to the size of the particles. In the case of the separation of the aforesaid particles, the depth of the groove is only some fractions of a millimeter, for example 0.1 mm, see Figure 3.

The conveyors 4;6 of respective separation stages may comprise vibratory conveyors positioned so as to form an angle to the horizontal plane in the intended conveying direction. Such conveyors provide a uniformly distributed layer of particles. Other conveyors, however, may also be used.

The most effective results are achieved when the metal particles are fed in the form of a thin, uniform layer. By thin is meant principally the height of individual particles, see Figure 4, where the reference 12 identifies part of a conveyor 4;6 and the reference 13 identifies a copper particle and the reference 14 a lead particle. The conveying directions are shown in all figures by arrows, with the exception of the arrows on the drum, which show the directions of drum rotation.

For the purpose of obtaining a thin layer on the conveyor 4 forming the first conveyor from a layer 15 of particles 13, 14, see Figure 2, a doctor blade or like levelling device 16 may be provided for the purpose of restricting the height of the particle layer 17 conveyed by the conveyor 4.

For example, a container 18 may be provided for mixed particles, which is provided at the bottom thereof with rotating outfeed rollers 19, 20 adapted to feed out the mixture of particles uniformly, see Figure 2.

Each feed conveyor 4;6 is preferably adapted so that the material has a low horizontal speed when deposited onto the drum periphery. This is achieved by positioning the vibratory conveyor in question in a manner such that it presents a small angle to the horizontal plane, and such that the inclined plane of the conveyor has an angle to the horizontal such that the particles are not conveyed along said inclined plane at excessive speeds. Preferably the particles have a horizontal velocity component which is far below the peripheral speed of the drum.

As will be understood, the distance $a$, the drum diameter and its rotational speed must be adapted to the relevant metals and their shapes. This adaption, however, will be readily achieved by one of normal skill in this art. In order to facilitate this adaption of the aforesaid parameters, the conveyors with which material is fed to a drum are preferably adjustable to different positions in relation to respective drums.

When feeding a mixture 17 of particles to a drum, the friction exhibited by the lead particles against the peripheral surface of the drum 4 is sufficient for these particles to accompany the drum beyond the highest point of the drum periphery, whereafter the lead particles fall from the drum 3 gravitationally in a stream 21, see Figure 2. The friction of the harder copper particles against the drum 4 is lower than that of the lead particles, and hence the copper particles will slide against the drum surface and fall down gravitationally on the other side of the drum 4, in a stream 22.

The distance $b$ between the outfeed end of the feed conveyor and the peripheral surface 8 of the drum 4 may be from 5 mm and up to 20-30 mm. At greater distances some of the harder copper particles will bounce on the drum periphery and join the stream 22 of copper particles. It is essential that the distance $b$ is not so great that the excessive numbers of the lead-particles bounce away from the drum and join the stream of copper particles. Since the lead particles are softer, these particles will not bounce as readily as the harder copper particles.

Exhaustive tests have been carried out with a mixture of copper and lead particles obtained by crushing electric cables in a conventional manner. The mixture comprised approximately 70% lead and 30% copper. Exceedingly good results were obtained.

After a single separation stage the stream 22 comprised mainly copper particles, approximately 70% copper particles and approximately 30% lead particles. Subsequent to passing through five mutually sequential stages, the particles were so well separated that the copper stream 41 contained about 95% copper particles and about 5% lead particles. This degree of separation is fully sufficient to enable the enriched copper to be utilized in copper manufacturing processes. The original mixture, however, contained too much lead to enable it to be used for producing copper.

According to a preferred form of the invention there is consequently provided two or more drums 4, 5, 23, 24, 25 placed one above the other, and a conveyor 6, 26, 27, 28 or like device is located beneath an overlying drum, this conveyor 6, 26, 27, 28 being arranged to convey those particles separated in opposite directions to the rotational direction of the overlying drum and further being arranged to deposit material onto an underlying drum, in a manner similar to that described with reference to the conveyors 4 and 6. Baffle plates 29, 30, 31, 32 may be provided to guide bouncing particles towards the outfeed end of respective conveyors 6, 26, 27, 28.

Located on the other side of respective drums, 3, 5, 23, 24, 25 are inclined surface in the form of plates 33, 34, 35, 36 which carry and guide the material stream 21 and corresponding material streams from drums located therebelow to a collecting conveyor 37 for removal of this material stream, said stream comprising mainly lead particles.

Arranged beneath the lowermost drum 25 is a further collecting conveyor 38 for collecting the other material stream 22, which comprises mostly copper particles.

The conveyors 37, 38 transport respective materials to suitable collecting containers 39, 40.

In accordance with one embodiment, the conveyor means referenced 6, 26, 27, 28, 33, 34, 35, 36 may comprise stationary inclined plates along which the particles are moved under the force of gravity. This also applies to the conveyors 37, and 38. Some of the conveyors, or all of said conveyors, however, may have the same construction as the conveyor referenced 4 in Figure 2. This conveyor is resiliently suspended from struts 41, 42 and has connected thereto an electromagnetic vibrator 43, with which the conveyor is vibrated so as to facilitate transportation of the particles therealong.

Thus, in the case of mixtures of mutually different particles where the particles cannot be mutually separated by means of conventional methods, such as methods which utilize the magnetic properties of the particles or a marked difference in their respective densities, the present invention enables these particles to be separated into their respective classes in a simple and effective manner.

The length of the drum may be adapted to the capacity desired. A larger number of drums placed immediately one above the other may also be used. Such modifications and other modifications of a technical and specialized nature are considered to be included in the invention.

## Claims

1. A method of separating metal particles from a mixture of different metals where particles of the one metal exhibit a higher degree of friction against a surface than particles of the other metal, particularly for separating lead particles and copper particles one from the other, characterized by feeding a layer of a mixture of said metal particles by means of a feed conveyor (4) or the like onto the peripheral surface (8) of a drum (3) rotating about a horizontal axis (7), at a location on the drum (3) spaced at a distance (a) from a vertical plane (2) through the drum axis (7), in a direction opposite to the rotational direction of the drum, this distance (a) being adapted so that the particles exhibiting a higher degree of friction against the peripheral surface (8) of the drum (3) than said other particles are carried with the drum in its direction of rotation, while said other particles are moved gravitationally in the opposite direction.

2. A method according to Claim 1, characterized by depositing the particle mixture while feeding the said mixture at a low horizontal speed.

3. A method according to Claim 1 or 2, characterized by rotating the drum (3) at a speed of 1 r.p.m. to 100 r.p.m., preferably 35-60 r.p.m.; and by using a drum (3) having a diameter of 50 mm to 200 mm, preferably 70 mm to 120 mm.

4. A method according to Claims 1, 2 or 3, characterized by placing two (3;5) or more drums (3, 5, 23, 24, 25) one above the other; and by feeding onto an underlying drum (5, 23, 24, 25) in the aforesaid manner by means of conveyor (6, 26, 27, 28) or like device particles which have been separated in a direction opposite to the rotational direction of respective drums.

5. A method according to Claims 1, 2, 3, or 4, characterized in that the drum or drums (3, 5, 23, 24, 25) used comprise a metal drum or drums having a roughened surface, this surface preferably being roughened by means of a milled groove (11) extending helically around the drum (3) and having a shallow depth in relation to the size of the particles being separated.

6. An arrangement for separating metal particles where the particles of one metal exhibit a higher degree of friction against a surface than the other of the metals, particularly for separating lead particles and copper particles from one another, characterized by a drum (3) which is rotatable about a horizontal axis; and a feed conveyor (4) or like device which is adapted to feed a mixture of said metal particles onto the peripheral surface (8) of the drum (3) at a location thereon spaced at a given distance (a) from a vertical plane (10) through the axis (7) of the drum (3), in the opposite direction to that in which the drum rotates, said distance (a) being such that those particles which exhibit greater friction against the peripheral surface (8) of the drum (3) as the drum rotates are carried by the drum in its direction of rotation, while said other particles are moved in an opposite direction gravitationally.

7. An arrangement according to Claim 6, characterized in that the drum (3) is arranged to rotate at a speed of 1 r.p.m. to 100 r.p.m., preferably 35 r.p.m. to 60 r.p.m.; and in that the drum has a diameter of 50 mm to 200 mm, preferably 70 mm to 120 mm.

8. An arrangement according to Claim 7, characterized in that two (3;5) or more (3, 5, 23, 24, 25) drums are placed one above the other; and in that a conveyor (6, 26, 27, 28) or like device is located beneath an overlying drum (3, 5, 23, 24) said conveyor being arranged to transport those particles separated in a direction opposite to the rotational direction of the overlying drum (3, 4, 23, 24) and being further arranged to deposit material onto an underlying drum (5, 23, 24, 25) in a manner similar to the aforesaid feed conveyor (4).

9. An arrangement according to Claims 6, 7 or 8, characterized in that the drum or drums (3, 5, 23, 24, 25) is, or are, a metal drum having a roughened surface, this roughening preferably having the form of a milled groove (11) which extends helically around the drum and which has a shallow depth in relation to the size of the particles.

10. An arrangement according to Claims 6, 7, 8, or 9, characterized in that said conveyors (4, 6, 26, 27, 28) comprise vibratory paths which form an angle to the horizontal plane in the intended conveying direction.

**Patentansprüche**

1. Verfahren zur Trennung von Metallteilchen aus einer Mischung verschiedener Metalle, wo Teilchen eines Metalles einen höheren Reibungsgrad gegen eine Oberfläche als Teilchen des anderen Metalles aufweisen, insbesondere zur Trennung von Bleiteilchen und Kupferteilchen voneinander, dadurch gekennzeichnet, daß eine Schicht einer Mischung von genannten Metallteilchen mittels eines Vorschubförderers (4) o.dgl. auf die Umkreisoberfläche (8) einer um eine horizontale Achse (7) sich drehenden Trommel (3) an einer Stelle auf der Trommel (3), die in einem Abstand (a) von der vertikalen Ebene (2) durch die Trommelachse (2) liegt, in einer Richtung entgegengesetzt zur Drehrichtung der Trommel gespeist wird, und dieser Abstand (a) so angepaßt ist, daß die Teilchen, die einen höheren Reibungsgrad gegen die Umkreisoberfläche (8) der Trommel (3) als genannte andere Teilchen aufweisen, mit der Trommel in ihrer Drehrichtung mitgenommen werden, während genannte andere Teilchen schwerkraftsmäßig in der entgegengesetzten Richtung bewegt werden.

2. Verfahren nach Anspruch 1, dadurch gekennzeichnet, daß die Teilchenmischung während Speisung der genannten Mischung bei einer niedrigen horizontalen Geschwindigkeit abgelagert wird.

3. Verfahren nach Anspruch 1 oder 2, dadurch gekennzeichnet, daß die Trommel (3) bei einer Geschwindigkeit von 1 U/min bis 100 U/min, vorzugsweise 35-60 U/min, gedreht wird, und eine Trommel (3) mit einem Durchmesser von 50 mm bis 200 mm, vorzugsweise 70 mm bis 120 mm, angewendet wird.

4. Verfahren nach den Ansprüchen 1, 2 oder 3, dadurch gekennzeichnet, daß zwei (3;5) oder mehr Trommeln (3, 5, 23, 24, 25) übereinander angeordnet werden, und Teilchen, die in einer Richtung entgegengesetzt zur Drehrichtung der betreffenden Trommeln getrennt wurden, auf die vorstehend genannte Weise mittels eines Förderers (6, 26, 27, 28) oder einer ähnlichen Vorrichtung auf eine darunterliegende Trommel (5, 23, 24, 25) gespeist werden.

5. Verfahren nach den Ansprüchen 1, 2, 3 oder 4, dadurch gekennzeichnet, daß die angewendete(n) Trommel(n) (3, 5, 23, 24, 25) aus einer Metalltrommel oder Metalltrommeln mit einer aufgerauhten Oberfläche bestehen, und diese Oberfläche vorzugsweise mittels einer gefrästen Nut (11) aufgerauht wird, die sich spiralförmig um die Trommel (3) erstreckt und eine im Verhältnis zur Größe der in Trennung befindlichen Teilchen seichte Tiefe hat.

6. Vorrichtung zur Trennung von Metallteilchen, wo die Teilchen eines Metalles einen höheren Reibungsgrad gegen eine Oberfläche als die anderen der Metalle aufweisen, insbesondere zur Trennung von Bleiteilchen und Kupferteilchen voneinander, dadurch gekennzeichnet, daß sie eine um eine horizontale Achse drehbare Trommel (3) sowie einen Vorschubförderer (4) oder ähnliche Einrichtung enthält, die geeignet ist, eine Mischung von genannten Metallteilchen auf die Umkreisoberfläche (8) der Trommel (3) an einer Stelle auf derselben, die in einem gegebenen Abstand (a) von einer vertikalen Ebene (10) durch die Achse (7) der Trommel (3) liegt, in entgegengesetzter Richtung zur Drehrichtung der Trommel zu speisen, und genannter Abstand (a) ein solcher ist, daß die Teilchen, die eine größere Reibung gegen die Umkreisoberfläche (8) der Trommel (3) bei deren Drehung aufweisen, von der Trommel in ihrer Drehrichtung mitgenommen werden, während genannte andere Teilchen in einer entgegengesetzten Richtung schwerkraftsmäßig bewegt werden.

7. Vorrichtung nach Anspruch 6, dadurch gekennzeichnet, daß die Trommel (3) angeordnet ist, mit einer Geschwindigkeit von 1 U/min bis 100 U/min, vorzugsweise 35 U/min bis 60 U/min, zu drehen, und die Trommel einen Durchmesser von 50 mm bis 200 mm, vorzugsweise 70 mm bis 120 mm, hat.

8. Vorrichtung nach Anspruch 7, dadurch gekennzeichnet, daß zwei (3;5) oder mehr (3, 5, 23, 24, 25) Trommeln übereinander angeordnet sind, und ein Förderer (6, 26, 27, 28) oder ähnliche Einrichtung unter einer darüberliegenden Trommel (3, 5, 23, 24) liegt, der angeordnet ist, die in einer Richtung entgegengesetzt zur Drehrichtung der darüberliegenden Trommel (3, 4, 23, 24) getrennten Teilchen zu befördern und auf eine dem vorgenannten Vorschubförderer (4) ähnliche Weise Material auf eine darunterliegende Trommel (5, 23, 24, 25) abzusetzen.

9. Vorrichtung nach den Ansprüchen 6, 7 oder 8, dadurch gekennzeichnet, daß die Trommel(n) (3, 5, 23, 24, 25) Metalltrommel(n) mit einer aufgerauhten Oberfläche ist(sind), und die Aufrauhung vorzugsweise die Form einer gefrästen Nut (11) hat, die sich spiralförmig um die Trommel erstreckt und eine im Verhältnis zur Größe der Teilchen seichte Tiefe hat.

10. Vorrichtung nach den Ansprüchen 6, 7, 8 oder 9, dadurch gekennzeichnet, daß genannte Förderer (4, 6, 26, 27, 28) schwingende Bahnen haben, die einen Winkel zu der horizontalen Ebene in der beabsichtigten Förderrichtung bilden.

## Revendications

1. Procédé de séparation de particules métalliques dans un mélange de métaux différents où les particules d'un métal présentent un degré de frottement contre une surface plus élevé que les particules de l'autre métal, en particulier pour la séparation de particules de plomb et de particules de cuivre les unes des autres, procédé caractérisé en ce qu'il consiste à faire descendre une couche de mélange de ces particules métalliques, au moyen d'un convoyeur d'alimentation (4) ou analogue, sur la surface périphérique (8) d'un tambour (3) tournant autour d'un axe horizontal (7), en un point du tambour (3) espacé d'une certaine distance (a) par rapport à un plan vertical (2) passant par l'axe (7) du tambour, dans une direction opposée au sens de rotation du tambour, cette distance (a) étant choisie de façon que les particules présentant, contre la surface périphérique (8) du tambour (3), un degré de frottement plus élevé que les autres particules, soient entraînées avec le tambour dans son sens de rotation, tandis que les autres particules sont entraînées dans le sens opposé sous l'effet de la pesanteur.

2. Procédé selon la revendication 1, caractérisé en ce qu'il consiste à déposer le mélange de particules en amenant ce mélange à une faible vitesse horizontale.

3. Procédé selon l'une quelconque des revendications 1 et 2, caractérisé en ce qu'il consiste à faire tourner le tambour (3) à une vitesse comprise entre 1 tour/minute et 100 tours/minute, et de préférence entre 35 et 60 tours/minute; et à utiliser un tambour (3) présentant un diamètre de 50 mm à 200 mm, et de préférence de 70 mm à 120 mm.

4. Procédé selon l'une quelconque des revendications 1 à 3, caractérisé en ce qu'il consiste à placer deux (3, 5) ou plusieurs tambours (3, 5, 23, 24, 25) les uns au-dessus des autres; et à amener sur un tambour placé au-dessous (5, 23, 24, 25), de la manière décrite ci-dessus en utilisant un convoyeur (6, 26, 27, 28) ou autre dispositif analogue, des particules ayant été séparées dans le sens opposé au sens de rotation des tambours respectifs.

5. Procédé selon l'une quelconque des revendications 1 à 4, caractérisé en ce que le tambour ou les tambours (3, 5, 23, 24, 25) utilisés sont constitués par un tambour ou des tambours métalliques présentant une surface rugueuse, la rugosité de cette surface étant de préférence obtenue en fraisant une rainure (11) disposée en hélice autour du tambour (3), cette rainure présentant une faible profondeur par rapport à la taille des particules à séparer.

6. Dispositif pour séparer des particules métalliques dans lesquelles les particules d'un métal présentent, contre une surface, un degré de frottement plus élevé que les particules de l'autre métal, en particulier pour séparer des particules de plomb et des particules de cuivre les unes des autres, dispositif caractérisé en ce qu'il comprend un tambour (3) pouvant tourner sur un axe horizontal; et un convoyeur d'alimentation (4) ou autre dispositif analogue conçu pour amener un mélange des particules métalliques sur la surface périphérique (8) du tambour (3) en un point de celui-ci opposé d'une distance donnée (a) par rapport à un plan vertical (10) passant par l'axe (7) du tambour (3), dans la direction opposée au sens de rotation du tambour, cette distance (a) étant telle que les particules qui présentent le plus grand coefficient de frottement contre la surface périphérique (8) du tambour (3), lorsque ce dernier tourne, sont entraînées par le tambour dans son sens de rotation, tandis que les autres particules sont entraînées en sens inverse sous l'effet de la pesanteur.

7. Dispositif selon la revendication 6, caractérisé en ce que le tambour (3) est conçu pour tourner à une vitesse comprise entre 1 tour/minute et 100 tours/minute, et de préférence entre 35 tours/minute et 6D tours/minute; et en ce que le tambour présente un diamètre de 50 mm à 200 mm, et de préférence de 70 mm à 120 mm.

8. Dispositif selon la revendication 7, caractérisé en ce que deux (3, 5) ou plus (3, 5, 23, 24, 25) tambours sont placés les uns au-dessus des autres; et en ce qu'un convoyeur (6, 26, 27, 28) ou autre dispositif analogue, est placé au-dessous d'un tambour supérieur (3, 5, 23, 24), ce convoyeur étant disposé de manière à transporter les particules séparées dans une direction opposée au sens de rotation du tambour supérieur (3, 4, 23, 24), ce tambour étant en outre disposé pour déposer le matériau sur un tambour placé au-dessous (5, 23, 24, 25) d'une manière analogue à celle du convoyeur d'alimentation ci-dessus (4).

9. Dispositif selon l'une quelconque des revendications 6 à 8, caractérisé en ce que le tambour ou les tambours (3, 5, 23, 24, 25) sont constitués par un ou plusieurs tambours métalliques présentant une surface rugueuse, cette rugosité se présentant de préférence sous la forme d'une rainure (11) fraisée en hélice autour du tambour, cette rainure étant peu profonde par rapport à la taille des particules.

10. Dispositif selon l'une quelconque des revendications 6 à 9, caractérisé en ce que les convoyeurs (4, 6, 26, 27, 28) constituent des chemins de passage vibrants formant un certain angle par rapport au plan horizontal dans la direction de transport voulue.

Fig.1

Fig.2

Fig.3

Fig.4